# EUROPEAN PATENT SPECIFICATION

(11) **EP 1 931 162 B1**
(45) Date of publication and mention of the grant of the patent: **18.02.2009**
(21) Application number: 06125683.0
(22) Date of filing: 08.12.2006
(51) Int. Cl.: H04W 4/10

(54) **Initiating communication in a push-to-talk over cellular (PoC) communication network**
Kommunikationseinleitung in einem push-to-talk over cellular (PoC) Kommunikationsnetzwerk
Initiation de communication dans un réseau de communication push-to-talk over cellular (PoC)

(43) Date of publication of application: 11.06.2008
(73) Proprietor: Research In Motion Limited, Waterloo, Ontario N2L 3W8 (CA)
(72) Inventor: Zhao, Wen, Kanata, Ontario K2M 2S8 (CA); Jin, Xin, Waterloo Ontario N2L 6R4 (CA)
(74) Representative: Rickard, David John

(56) References cited:
- WO-A-99/22478
- WO-A-20/06058345
- US-A1- 2006 040 702
- US-B1- 6 615 050

## Description

This application relates generally to wireless communication, and more particularly to initiating communication in a cellular network.

Before a wireless device can be used as a walkie-talkie, a PoC (Push-to-talk over Cellular) session is to be established. Each time a user pushes the button to talk, the wireless device transmits one or a sequence of access probe to a transceiver from which the wireless device monitors paging channel. The transceiver may be a part of a base station transceiver system (BTS) serving an area known as a cell. The area is often sectorized into sectors in which case the BTS typically has a respective transceiver for each sector. Therefore, the smallest area that is covered by a transceiver at a cell site is either a cell or a sector, depending on whether the cell is sectorized. The access probe transmitted by the wireless device in a CDMA based wireless network is spread by a pseudo noise (PN) code associated with the transceiver from which the wireless device monitors paging channel. The transceiver distinguishes the access probe from other signals based on the PN code that the access probe signal uses. Other signals are treated as interferences and are disregarded. If the transceiver receives and decodes the access probe, then the transceiver may initiate response actions by transmitting an acknowledgement message to the wireless device. A series of other response actions also occur, for example, in response to an access probe for initiating a PoC communication, a base station transceiver may instruct the wireless device to start a traffic channel, transceivers in the wireless network may page all other users in the PTT group, etc. The access probe may also reach other transceivers, which are intended for serving other areas, but they treat the access probe as interference and do not attempt to decode it. Transceivers only attempt to decode signals spread by their respective PN code.

There may be many wireless devices attempting to initiate communication by transmitting an access probe to the same transceiver at the same time. This can result in a collision between two or more access probes sent from two or more wireless devices. During a collision, one or more access probes are typically not successfully received and decoded by the transceiver. In the event that an access probe is transmitted and is not acknowledged by the transceiver by a certain time-out period, the wireless device transmits another access probe at some later time so as to re-attempt initiating communication. There may be many attempts before a PoC session is successfully established. Typically, access probes are transmitted at random time intervals so as to reduce the likelihood of collisions with other access probes transmitted by other wireless devices that are similarly attempting to initiate communication.

PoC is a time-minded application. Therefore, slow access to the network has significant negative impact to the PoC user experience. When a wireless device experiences a greater number of failed access probes, the PoC session takes longer to become established. For example, in some instances, it may take between five and seven seconds to establish a PoC session. This results in the user being inconvenienced with having to wait five to seven seconds before being able to talk once the button to talk has been pressed. To some users this is unacceptable.

For general information on transceivers receiving and decoding access codes attention is directed to WO 99/22478. US 6615050 discloses the possibility of a mobile station using a common PN code which a mobile station can use to request initiation of calls on a common access channel.

### General

According to a broad aspect, there may be provided a method in a cellular network comprising a plurality of transceivers, the method comprising: a first transceiver of the plurality of transceivers receiving and decoding an access probe that uses any one of at least one access code; and at least one other transceiver of the plurality of transceivers receiving and decoding the access probe.

In a preferred method, the first transceiver receiving and decoding the access probe comprises: the first transceiver receiving and decoding a first access probe that uses a primary access code associated with the first transceiver, the primary access code associated with the first transceiver also being a secondary access code for the at least one other transceiver.

According to another broad aspect, there may be provided a computer readable medium having computer executable instructions stored thereon for execution on a processor so as to implement the method summarised above.

According to another broad aspect, there may be provided a transceiver operable to implement the method summarised above.

According to another broad aspect, there may be provided a method comprising: receiving information indicating that an access probe was received and decoded by a first transceiver of a plurality of transceivers; determining which at least one transceiver of the plurality of transceivers is to take response actions to the access probe; and sending an indication for the at least one particular transceiver to take response actions to the access probe.

There may be provided a plurality of transceivers operable to implement the foregoing method. These may form part of or be in combination with a cellular network.

According to another broad aspect, there may be provided a computer readable medium having computer executable instructions stored thereon for execution on a processor so as to implement the method summarised above.

According to another broad aspect, there is provided a decision node operable to implement the method summarised above.

According to an embodiment, there may be provided a method comprising: a first transceiver of a plurality of transceivers receiving and decoding access probes on channels that use any one of a first set of at least two access codes; a second transceiver of the plurality of transceivers receiving and decoding access probes on channels that use any one of a second set of at least two access codes.

In some implementations, the first set and the second set may be identical, each transceiver receiving and decoding access probes that use any one of at least two common access codes.

In some implementations, the first set and the second set may be different from one another, each transceiver receiving and decoding access probes that use a primary access code associated with the transceiver and access probes that use a secondary access code, the secondary access code being a primary access code of a neighbouring transceiver.

### Brief Description of the Drawings

Embodiments will now be described with reference to the attached drawings in which:
Figure 1 is a schematic of an example cellular network having a plurality of BTSs;
Figure 2 is a schematic of one of the BTSs shown in Figure 1;
Figure 3 is a flowchart of an example method of initiating communication in a cellular network;
Figure 4 is a graph illustrating an even distribution of n-common access codes among wireless devices;
Figure 5 is a flowchart of an example method of determining which particular transceiver is to take response actions to the access probe;
Figure 6 is a flowchart of another example method of initiating communication in a cellular network;
Figure 7 is a table showing an example of PN codes that can be decoded by each transceiver; and
Figure 8 is a flowchart of another example method of initiating communication in a cellular network.

### Description of Preferred Embodiments

### Cellular Network

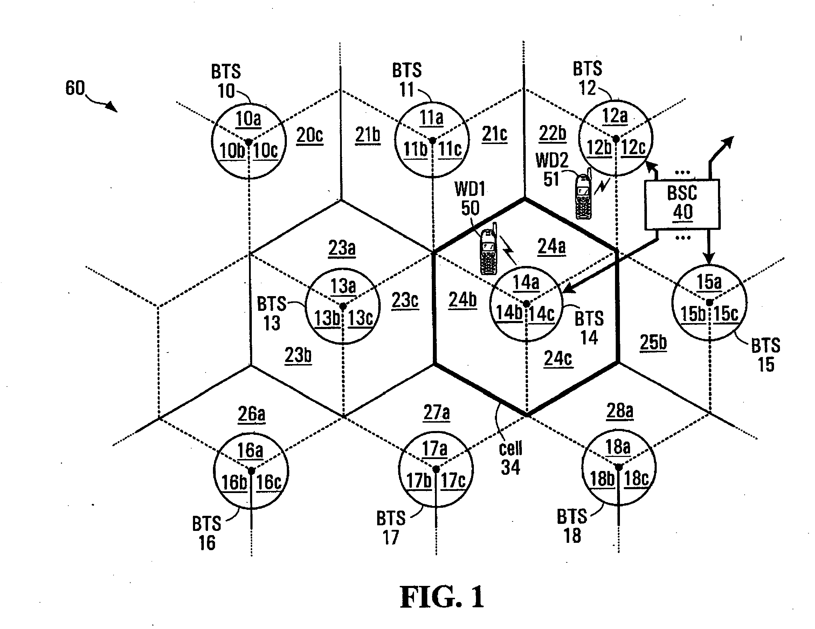

Referring now to Figure 1, shown is a schematic of an example cellular network 60 having a plurality of BTSs
(base station transceiver systems)
10,11,12,13,14,15,16,17,18. Each BTS has three transceivers: BTS 10 has transceivers 10a,10b,10c; BTS 11 has transceivers 11a,11b,11c; BTS 12 has transceivers 12a,12b,12c; BTS 13 has transceivers 13a,13b,13c; BTS 14 has transceivers 14a,14b,14c; BTS 15 has transceivers 15a,15b,15c; BTS 16 has transceivers 16a,16b,16c; BTS 17 has transceivers 17a,17b,17c; and BTS 18 has transceivers 18a,18b,18c. The transceivers 10c, 11b, 11c, 12b, 13a, 14a, 13b, 13c, 14b, 14c, 16a, 17a, and 18a correspond with cell sectors 20c, 21b, 21c, 22b, 23a, 24a, 23b, 23c, 24b, 24c, 25b, 26a, 27a, and 28a, respectively. The BTS 14 with the three transceivers 14a,14b,14c divide a cell 34 into the three cell sectors 24a,24b,24c. The cellular network 60 has other cells, but they are not referred to by number. A first wireless device 50 is shown to be currently positioned in the cell sector 24a. A second wireless device 51 is shown to be currently positioned in the cell sector 22b. The cellular network may have other wireless devices, but they are not shown for sake of simplicity. A BSC (Base Station Controller) 40 is coupled to at least some of the plurality of BTSs.

In some implementations, the cellular network 60 is a CDMA network. However, more generally, the cellular network 60 may be any wireless network.

It is to be understood that the cellular network 60 shown in Figure 1 is very specific for example purposes only. While sectorization is shown with three sectors per cell, alternative approaches are possible by dividing each cell into a different number of sectors or by not dividing cells at all. Combinations are also possible where some cells are divided into a first number of cell sectors while other cells are divided into a second number of cell sectors. The cellular network 60 may have other components, but they are not shown for sake of simplicity.

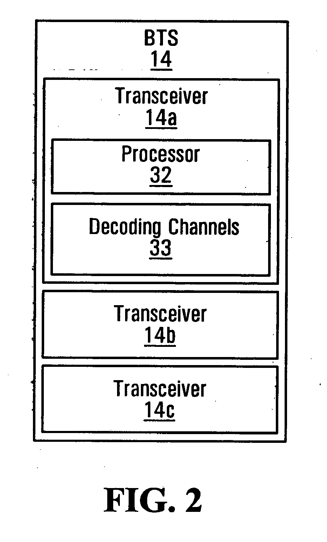

Referring now to Figure 2, shown is a schematic of the BTS 14 shown in Figure 1. At least some of the BTS 10,11,12,13,15,16,17,18 have similar components to that shown in Figure 2. In some implementations, every BTS 10,11,12,13,15,16,17,18 of the cellular network 60 has similar components to that shown in Figure 2. The BTS 14 has three transceivers 14a,14b,14c. The transceiver 14a has a processor 32 and decoding channels 33. The other transceivers 14b,14c of the BTS 14 have similar components, but they are not shown for sake of simplicity. The BTS 14 and the transceivers 14a,14b,14c may have other components, but they are also not shown for sake of simplicity.

In operation, each transceiver 14a,14b,14c is operable to receive and decode access probes. The decoding channels 33 include a respective decoding channel for each access code that the transceiver 14a is capable of decoding. In some implementations, the decoding channels 33 include only a single decoding channel. In other implementations, the decoding channels 33 include a plurality of decoding channels.

In the illustrated example, the transceiver 14a is provided with its own resources such as the processor 32. However, in other implementations, the transceivers 14a,14b,14c have shared resources. In a first example, the transceivers 14a,14b,14c share a common processor (not shown). Resource sharing may be implemented, for example using time-division sharing. In the examples provided below, reference is made to actions executed by transceivers. It is to be understood that such actions are performed by the transceivers despite the fact that there may be some utilization of shared resources.

The decoding channels 33 may be implemented using a digital signal processor (DSP), an application specific integrated circuit (ASIC), or any other appropriate hardware. More generally, each decoding channel may be implemented as software, hardware, firmware, or any appropriate combination thereof.

The number of decoding channels 33 is implementation specific and depends on how many different access codes are to be decoded. Increasing the number of decoding channels can result in fewer collisions between access probes, as access probes utilising different access codes may be concurrently received and decoded by a plurality of decoding channels of a single transceiver. While increasing the number of decoding channels may result in fewer collisions, increasing the number of decoding channels 33 beyond a certain point may become economically inefficient or impractical.

Referring back to Figure 1, in operation, the first wireless device 50 monitors a paging channel transmitted by the transceiver 14a while the second wireless device 51 monitors a paging channel transmitted by the transceiver 12b. Monitoring a paging channel is only one example of a service association. Other service associations are possible and may for example include monitoring a paging channel, monitoring a control channel, monitoring a broadcasting channel, an idle hand-off, an idle hand-over, a registration, a pairing, or a camping relation/procedure. More generally, the service association may be any appropriate association between the transceiver and the wireless device in which a type of communication service is concerned.

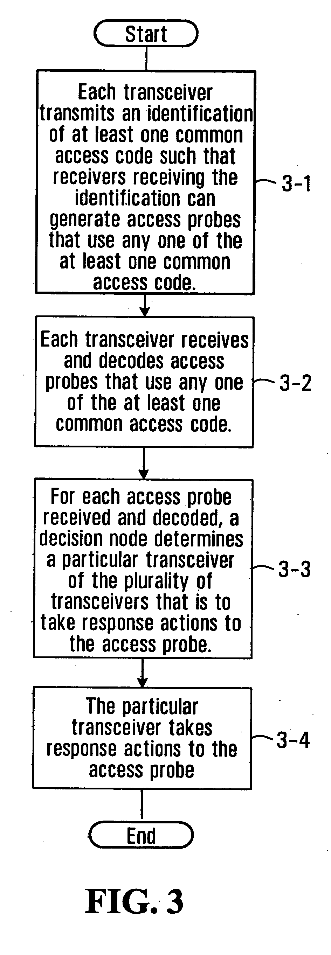

According to a first embodiment, each transceiver is operable to receive and decode access probes that use any one of at least one common access code. Each transceiver listens for access probes that use any one of the at least one common access code regardless of whether there is a service association with the wireless devices from which the access probes originated. For example, if the first wireless device 50 transmits an access probe that uses a common access code, then not only does the transceiver 14a listen for the access probe, but each and every transceiver listens for the access probe. This allows the access probe to be received and decoded by the cellular network 60 even if the transceiver 14a was unsuccessful in receiving and decoding the access probe. Further details are provided below with reference to Figure 3.

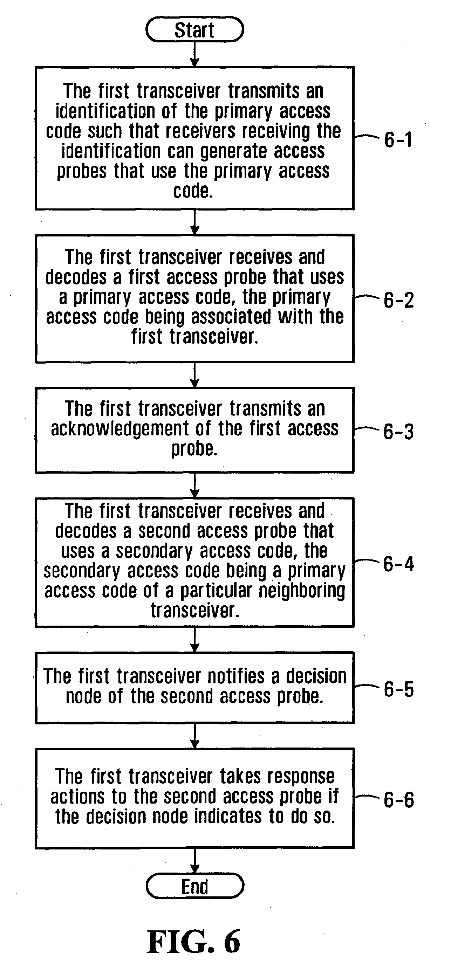

According to another embodiment, each transceiver is operable to receive and decode access probes that use a primary access code, which is assigned to the transceiver, and also access probes that use a secondary access code. A secondary access code is a primary access code assigned to a neighbouring transceiver. For example, the transceiver 14a is operable to receive and decode access probes that use the primary access code of the transceiver 14a. Such access probes may for example originate from the first wireless device 50. Additionally, the transceiver 14a is operable to receive and decode access probes that use the primary access code of the transceiver 12b. Such access probes may for example originate from the second wireless device 51. Further details are provided below with reference to Figure 6.

### Common Access Code Method

Referring now to Figure 3, shown is a flowchart of an example method of initiating communication in a cellular network. This method may be implemented by a plurality of transceivers, for example by transceivers 14a and 12b of the cellular network 60 shown in Figure 1. The method is described below with reference to only two transceivers 14a,12b for sake of simplicity. However, it is to be understood that the method may be implemented by any number of transceivers including each and every transceiver of the cellular network 60. The method is described with reference to components of the cellular network 60 for readability purposes. However, it is to be understood that the method is not limited to the features and arrangements shown in the cellular network 60.

In some implementations, as indicated by step 3-1, each transceiver 14a,12b transmits an identification of at least one common access code such that receivers receiving the identification can generate access probes that use any one of the at least one common access code corresponding to the identification. With reference to Figure 1, the first wireless device 50 may for example be one of the receivers. The first wireless device 50 may receive the identification for example through a service association, examples of which have been provided. Alternatively, the at least one common access code may be predetermined and known to the wireless device 50 regardless of whether there is a service association. Once the first wireless device 50 is privy to a common access code, the first wireless device 50 can transmit an access probe that uses the common access code.

At step 3-2, each transceiver 14a,12b receives and decodes access probes that use any one of the at least one common access code. The access probes may for example be received from the first wireless device 50. Since both of the transceivers 14a,12b listen for access probes transmitted from the first wireless device 50, the access probe from the first wireless device 50 can be received and decoded by the cellular network 60 even if the transceiver 14a does not receive and decode the access probe.

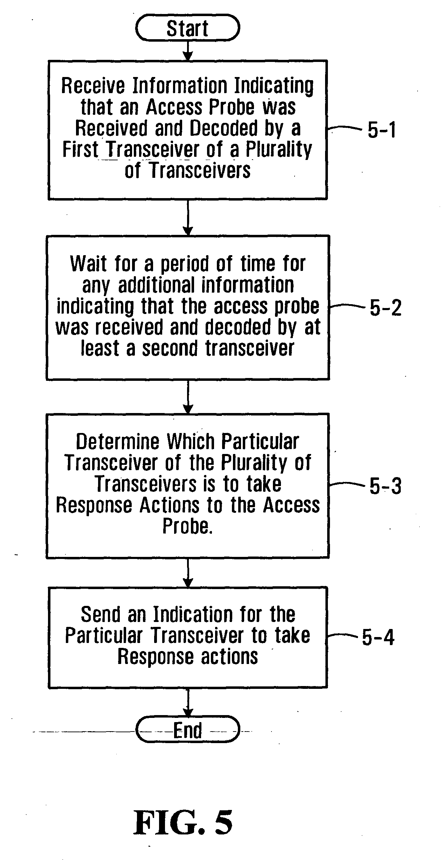

In some implementations, as indicated by step 3-3, for each access probe received and decoded by any of the transceivers 14a,12b, a decision node determines a particular transceiver of the plurality of transceivers that is to take response actions to the access probe. The decision node may for example be the BSC 40, an RNC (Radio Network Controller), a transceiver that has a service association with the wireless device from which the access probe originated (e.g. transceiver 14a), or another transceiver. In some implementations, the decision node is any one neighbouring transceiver that is reported by the wireless device to provide better signal quality in the downlink (forward link) than other neighbouring transceivers. This one neighbouring transceiver may or may not be the transceiver that has the service association with the wireless device. Further details of how the decision node makes this determination is provided below with reference to Figure 5. At step 3-4, the particular transceiver determined by the decision node takes response actions to the access probe. In other implementations, each transceiver that receives and decodes an access probe takes response actions to the access probe without input from a decision node. Other implementations are possible.

In the examples present herein, "response actions" refer to appropriate actions for responding to the access probe, for example transmitting an acknowledgement. The "response actions" may include other response actions as appropriate, for example instructing the wireless device to start a traffic channel, informing the wireless network to paging all other users in a PTT group, etc. It is to be understood that "response actions" are implementation specific and may depend on the situation in which the response actions are being performed.

In some implementations, the at least one common access code is a single common access code. In some instances, when wireless devices are each transmitting access probes that use a single common access probe there may be frequent collisions. Therefore, in other implementations, the at least one common access code is a plurality of common access codes. In some implementations, each wireless device in the cellular network is assigned one of the plurality of common access codes. Each transceiver is capable of receiving and decoding access probes that use any of the plurality of common access codes.

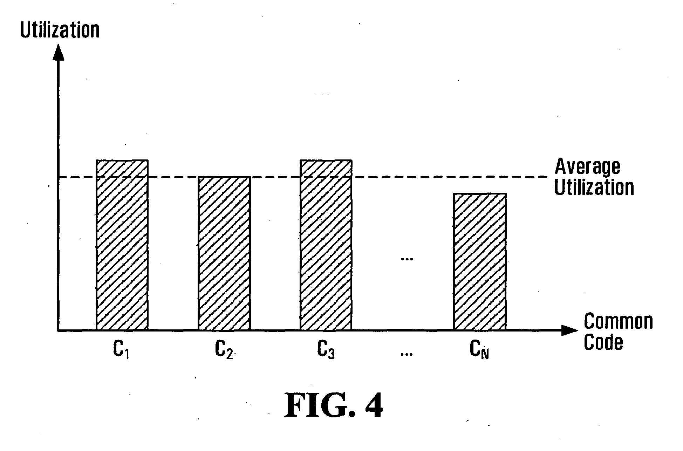

There are many ways that a plurality of common access codes can be assigned. In some implementations, an approximately equal number of wireless devices utilise each of n-common access codes. Referring now to Figure 4, shown is a graph illustrating an even distribution of n-common access codes among wireless devices. Each one of n-common access codes C₁, C₂, C₃,..., Cₙ are utilised by approximately the same number of wireless devices. There are many ways that a common access code can be predetermined to achieve such a distribution. In some implementations, the common access code is predetermined based on a phone number of the wireless device. For example, if there are ten common access codes, then the last digit of the phone number, which has ten possibilities, may be used to determine which one of the ten common access codes is to be utilised. This may achieve an approximately equal utilisation of each of the ten common access codes. Other implementations are possible.

There are many ways that the decision node can determine which particular transceiver is to take response actions to the access probe. Referring now to Figure 5, shown is a flowchart of an example method of determining which particular transceiver is to take response actions to the access probe. This method may be implemented by a decision node, for example by the BSC 40 or any transceiver shown in Figure 1, or alternatively by an RNC (Radio Network Controller). At step 5-1, the decision node receives a message that an access probe was received and decoded by a first transceiver of a plurality of transceivers. In some implementations, as indicated by step 5-2, upon receiving the information that the access probe was received and decoded by the first transceiver, the decision node waits for a period of time for any additional information indicating that the access probe was received and decoded by at least a second transceiver. Alternatively, the decision node does not wait to receive any additional information. At step 5-3, the decision node determines which particular transceiver of the plurality of transceivers is to take response actions to the access probe. In some implementations, if additional information is received that indicates that the access probe was received and decoded by at least a second transceiver, then the additional information is used in determining which particular transceiver is to take response actions. At step 5-4, the decision node sends an indication for the particular transceiver to take response actions to the access probe.

There are many ways for the decision node to wait for the period of time for any additional information. In some implementations, the decision node uses a timer for timing the period of time. The period of time may be any appropriate period of time, for example 0.1 second. Alternatively, the period of time may be between zero and a few seconds. Other periods of time are possible. The timer is set so that it expires after the period of time, at which time the decision node stops waiting for additional information.

In some implementations, the decision node chooses the particular transceiver as being the transceiver that has a service association with the wireless device from which the access probe originated. Typically, the transceiver that has the service association with the wireless device has the best downlink and uplink connectivity with the wireless device. Therefore, a transceiver that receives an access probe from a wireless device is often the transceiver that has a service association with the wireless device. However, this is not always the case. Service associations are typically chosen so to maximise the downlink connectivity with less consideration of uplink connectivity. Even if a given transceiver statistically has the best uplink connectivity with a wireless device, it is still possible for an access probe to be decoded successfully by another transceiver and unsuccessfully by the given transceiver because the success of decoding is random. It is possible that statistically the transceiver that has the service association with the wireless device is in the best position to take response actions to the access probe despite another transceiver being in a better position to receive and decode the access probe.

In other implementations, the decision node chooses the particular transceiver based on signal qualities of access probes received by each transceiver. For example, a transceiver receiving the access probe with greatest signal strength or signal to interference ratio is determined to take response actions to the access probe. However, it is again noted that a transceiver receiving an access probe with favourable signal qualities does not necessarily mean that the transceiver is in the best position to take response actions to the access probe. More generally, the decision node chooses the particular transceiver based on signal quality of the uplink (reverse link).

In other implementations, the decision node chooses the particular transceiver based on signal qualities of signals transmitted by the transceivers as seen by the wireless device from which the access probe originated. More generally, the decision node chooses the particular transceiver based on signal quality of the downlink (forward link). In some implementations, the signal quality seen at the wireless device from which the access probe originated is reported to the decision node as a part of the access probe. In some implementations, the access probe includes the signal quality information for at least the best signal among signals from all the transceivers that are received by the wireless device 50. In some implementations, any transceivers that receive the access probe will notify the transceiver that has the best signal as reported by the wireless device. In some implementations, the transceiver that has the best reported signal quality by the wireless device will take response actions to the access probe without notification from a decision node.

In other implementations, a combination of criteria, such as signal qualities of access probes received by each transceiver and signal qualities of signals transmitted by the transceivers as seen by the wireless device from which the access probe originated, is considered by the decision node. Other implementations are possible.

There are many possibilities for the indication. In some implementations, the indication includes parameters used for transmitting an acknowledgement and for performing any other response actions. Such parameters may for example include device ID (such as ESN, IMSI), frequency channel, transmission time, paging channel number, spreading code, modulation format, and data contents. In some implementations, the paging channel number, spreading code and modulation format match are what the wireless device uses to listen to the acknowledgement. In other implementations, these parameters are omitted because the transceiver knows these parameters once it is aware of the device ID, and the wireless device knows these parameters since it is already using these parameters to listen to an incoming acknowledgement, such as through service association. Other implementations are possible.

In the examples presented above, a single transceiver is to take response actions to an access probe. In another implementation, a plurality of transceivers may simultaneously take response actions to the access probe. More generally, one or more transceivers may take response actions to the access probe. Each of the one or more transceivers may transmit an acknowledgment, and may even perform further response actions as appropriate. In some implementations, a decision node determines which one or more transceivers are to take response actions. In other implementations, the one or more transceivers are simply whichever transceivers happen to receive the access probe. Other implementations are possible.

In the examples provided above, access probes are described to "use" a common access code. There are many possibilities for such use. In some implementations, each access probe is spread by a common access code. Other implementations are possible.

In the examples provided above, reference is made to common access codes. The nature of the common access codes is implementation specific. In some implementations, each common access code is a PN (pseudo noise) code. Other implementations are possible.

### Common Access Code Example

To provide further explanation, the above method is described in the context of another example with reference to the cellular network 60 shown in Figure 1. It is to be understood that this example is very specific for explanatory purposes.

The first wireless device 50 is currently positioned in sector 24a. The wireless device 50 transmits an access probe spread with a common PN code. Each transceiver of the cellular network 60 listens for access probes spread with the common PN code. However, only transceivers 10c and 14b successfully receive and decode the access probe. Each of the transceivers 10c and 14b report to a decision node, which is the BSC 40 in this example. The BSC 40 determines that the transceiver 14a is to take response actions to the access probe and sends an indication to the transceiver 14a. Upon receipt of the indication, the transceiver 14a transmits an acknowledgement to the wireless device 50 and may perform further response actions. Upon receipt of the acknowledgement, the wireless device 50 is provided with validation that the access probe was received and decoded. Note that in this example the access probe was received and decoded by the cellular network 60 despite the access probe not being received and decoded by the transceiver 14a.

### Primary and Secondary Access Code Method

Referring now to Figure 6, shown is a flowchart of another example method of initiating communication in a cellular network. This method may be implemented by a transceiver, for example by the transceiver 14a of the cellular network 60 shown in Figure 1. The method is described with reference to components of the cellular network 60 for readability purposes. However, it is to be understood that the method is not limited to the features and arrangements shown in the cellular network 60.

In some implementations, as indicated by step 6-1, the transceiver 14a transmits an identification of its primary access code such that receivers receiving the identification can generate access probes that use the primary access code. The primary access code is an access code that has been assigned to the transceiver 14a. The identification may for example be transmitted during a service association, examples of which have been provided. The identification may also be continuously or periodically broadcasted to all users in its signal coverage area. The first wireless device 50 receives the identification and is therefore privy to the primary access code. The first wireless device 50 transmits a first access probe that uses the primary access code.

At step 6-2, the transceiver 14a receives and decodes the first access probe that uses its primary access code. In some implementations, as indicated by step 6-3, the transceiver 14a transmits an acknowledgement of the first access probe and may further perform other response actions. If the wireless device receives the acknowledgment, then the first wireless device 50 is provided with validation that the first access probe was successfully received and decoded.

The second wireless device 51 transmits a second access probe that uses a primary access code of the neighboring transceiver 12b. The primary access code of the neighboring transceiver 12b is a secondary access code to the transceiver 14a. At step 6-4, the transceiver 14a receives and decodes the second access probe that uses the secondary access code. In some implementations, as indicated by step 6-5, the transceiver 14a notifies a decision node of the second access probe and at step 6-6 takes response actions to the second access probe if the decision node indicates to do so. In some implementations, notifying the decision node involves notifying any of the example decision nodes described above with reference to Figure 3. If the decision node selects another transceiver, such as the neighboring transceiver 12b, then the another transceiver takes response actions to the second access probe. Examples of how the decision node may determine which particular transceiver is to take response actions have been provided already and therefore are not repeated. The response actions include transmitting an acknowledgement to the second wireless device that sent the access probe. Upon receiving an acknowledgment, the second wireless device 51 is provided with validation that the second access probe was received and decoded.

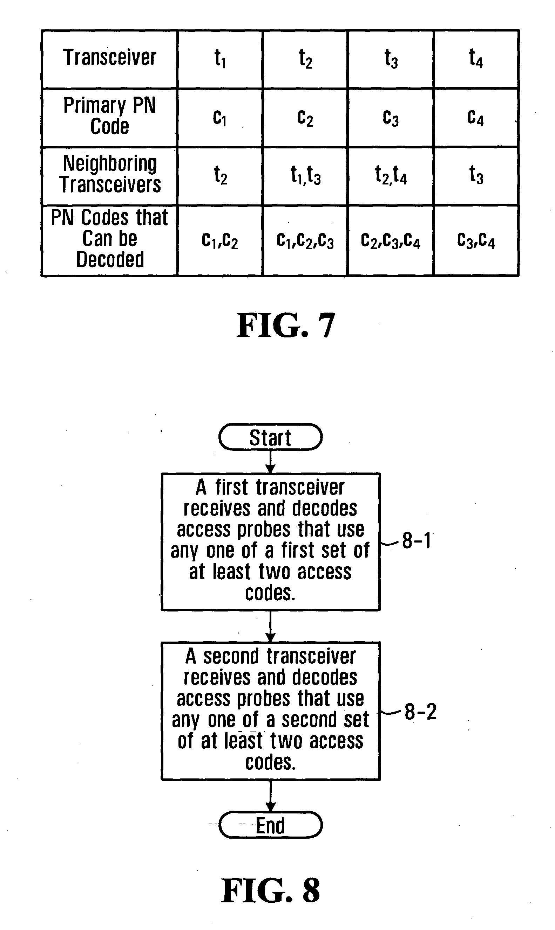

In some implementations, each transceiver is operable to receive and decode access probes that use the primary access code assigned to the transceiver as well as secondary access codes, which are primary access codes assigned to neighbouring transceivers. Referring now to Figure 7, shown is a table of example access codes that can be decoded by each transceiver. Transceivers t₁, t₂, t₃, and t₄ have their assigned transceiver-specific access codes of c₁, c₂, c₃, and c₄, respectively. Transceiver t₁ has the transceiver t₂ as a neighbour and therefore is configured to decode c₂ in addition to c₁. Transceiver t₂ has the transceivers t₁ and t₂ as neighbours and therefore is configured to decode c₁ and c₃ in addition to c₂. Transceiver t₃ has the transceivers t₂ and t₄ as neighbours and therefore is configured to decode c₂ and c₄ in addition to c₃. Transceiver t₄ has transceiver t₃ as a neighbour and therefore is configured to decode c₃ in addition to C₄.

There are many ways to determine which transceivers are neighbouring transceivers. In some implementations, a predefined neighbour list determines for each base station which base stations are neighbouring base stations. Each transceiver of a neighbouring base station may be determined to be a neighbouring transceiver. Transceivers of the same base station that serves other sectors are also neighbour transceivers. In some implementations, when transceivers are adjacent to one another, they are determined to be neighbouring transceivers. For example, transceiver 14a has many adjacent transceivers such as transceivers 14b, 14c, 11c, 12b. These adjacent transceivers may be determined to be neighbouring transceivers. In some implementations the number of neighbouring transceivers is limited by how many decoding channels the transceivers may be provided with. In some implementations, all transceivers of the same wireless network are neighbour transceivers. Other implementations are possible.

In the examples provided above, access probes are described to "use" a primary or secondary access code. There are many possibilities for such use. In some implementations, each access probe is spread by a primary or secondary access code. Other implementations are possible.

In the examples provided above, reference is made to primary and secondary access codes. The nature of the primary and secondary access codes is implementation specific. In some implementations, each primary or secondary access code is a PN (pseudo noise) code. Other implementations are possible.

### Primary and Secondary Access Code Example

To provide further explanation, the above method is described in the context of another example with reference to the cellular network 60 shown in Figure 1. It is to be understood that this example is very specific for explanatory purposes.

The first wireless device 50 is currently positioned in sector 24a and listens to paging channel from the transceiver 14a. The first wireless device 50 chooses a first transceiver-specific PN code, which is the primary access code of the transceiver 14a. The first wireless device 50 transmits a first access probe spread with the first transceiver-specific PN code.

The second wireless device 51 is currently positioned in sector 22b and listens to paging channel from the transceiver 12b. The second wireless device 51 chooses a second transceiver-specific PN code, which is the primary access code of the transceiver 12b. The second wireless device 51 transmits a second access probe spread with the second transceiver-specific PN code.

The transceiver 14a listens for access probes spread by the first transceiver-specific PN code. The transceiver 14a also listens for access probes spread by other transceiver-specific PN codes of neighboring transceivers 12b and 11c. Therefore, the transceiver 14a is capable of receiving and decoding the second access probe in addition to the first access probe. The transceiver 14a is also capable of receiving and decoding an access probe transmitted from the cell sectors 21c and 22b.

In this example, the transceiver 14a successfully receives and decodes both the first access probe and the second access probe, while none of the other transceivers of the cellular network 60 successfully receive and decode the first access probe or the second access probe. The transceiver 14a determines that the second access probe originated from a wireless device that uses a PN code associated with its neighbor transceiver, namely the transceiver 12b. The transceiver 14a informs the transceiver 12b of the second access probe. In response, the transceiver 12b transmits an acknowledgment to the second wireless device 51 and may perform further response actions for initiating a communication. Accordingly, the transceiver 12b is able to acknowledge receipt of the second access probe despite not receiving the second access probe when the second wireless device 51 transmitted it. The transceiver 14a determines that the first access probe originated from a wireless device that uses a PN code associated with the transceiver 14a. On this basis, the transceiver 14a transmits an acknowledgement to the first wireless device 50 and may perform further response actions for initiating a communication.

### Another Method

Referring now to Figure 8, shown is a flowchart of another example method of initiating communication in a cellular network. This method may be implemented by a plurality of transceivers, for example by transceivers 14a and 12b of the cellular network 60 shown in Figure 1. The method is described below with reference to only two transceivers for sake of simplicity. However, it is to be understood that the method may be implemented by more than two transceivers of the cellular network 60.

At step 8-1, a first transceiver receives and decodes access probes that use any one of a first set of at least two access codes. At step 8-2, a second transceiver receives and decodes access probes that use any one of a second set of at least two access codes.

There are many possibilities for the first set of at least two access codes and the second set of at least two access codes. In some implementations, the first set and the second set are identical. This includes the possibility where each transceiver receives and decodes access probes that use any one of at least two common access codes. In this case, the method resembles the common access code method described above with reference to Figure 3. In other implementations, the first set and the second set are different from one another. This includes the possibility where each transceiver receives and decodes access probes that use a primary access code associated with the transceiver and access probes that use a secondary access code, the secondary access code being a primary access code of a neighbouring transceiver. In this case, the method resembles the primary and secondary access code method described with reference to Figure 6.
Numerous modifications and variations of the present application are possible in light of the above teachings. It is therefore to be understood that within the scope of the appended claims, the application may be practiced otherwise than as specifically described herein.

## Claims

1. A method in a cellular network (60) comprising a plurality of transceivers (11c, 12b, 14a), the method comprising:
a first transceiver (14a) of the plurality of transceivers (11c, 12b, 14a) receiving and decoding an access probe that uses any one of at least one access code; and
at least one other transceiver (12b) of the plurality of transceivers (11c, 12b, 14a) receiving and decoding the access probe.

2. The method of claim 1 wherein the at least one access code comprises a plurality of access codes that are common to the plurality of transceivers (11c, 12b, 14a).

3. The method of claim 1 or claim 2 further comprising:
a decision node (40, 14a) determining (3-3) at least one particular transceiver (14a) of the plurality of transceivers (11c, 12b, 14a) that is to take response actions to the access probe; and
each of the at least one particular transceivers (14a) taking response actions to the access probe.

4. The method of claim 3 wherein the decision node (40, 14a) is any one of:
a Base Station Controller (40);
a Radio Network Controller;
a particular transceiver (14a) having a service association with a transmitter (50) of the access probe; or
any one neighbouring transceiver (11c) to the particular transceiver (14a), the one neighbouring transceiver (11c) being selected from all neighbouring transceivers (14b, 14c, 11c, 12b) based on receiving a report from a transmitter (50) of the access probe that there is a better signal quality from the one neighbouring transceiver (11c) than from other neighbouring transceivers (14b, 14c, 12b).

5. The method of any one of claims 1 to 4 further comprising:
each transceiver (11c, 12b, 14a) transmitting an identification of the at least one access code such that receivers (50, 51) receiving the identification can generate access probes that use any one of the at least one access code.

6. The method of any one of claims 1 to 5 wherein each access probe is spread by any one of the at least one access code.

7. The method of any one of claims 1 to 6 wherein each of the at least one access code is a pseudo noise code.

8. The method of claim 1 wherein the first transceiver (14a) receiving and decoding the access probe comprises:
the first transceiver (14a) receiving and decoding (6-2) a first access probe that uses a primary access codeassociated with the first transceiver (14a), the primary access code associated with the first transceiver also being a secondary access code for the at least one other transceiver (12b).

9. The method of claim 8 further comprising:
the first transceiver (14a) receiving and decoding (6-4) a second access probe that uses a secondary access code, the secondary access code being a primary access code of a particular neighbouring transceiver (12b).

10. The method of claim 8 or claim 9 further comprising:
the first transceiver (14a) taking (6-6) response actions to the first access probe.

11. The method of claim 8 or claim 9 further comprising:
the first transceiver (14a) notifying (6-5) a decision node (40, 11c, 12b,) of the second access probe.

12. The method of claim 11 wherein the first transceiver (14a) notifying (6-5) the decision node (40, 11c, 12b,) of the second access probe comprises at least one of:
the first transceiver (14a.) notifying a Base Station Controller (40) of the second access probe;
the first transceiver (14a) notifying a Radio Network Controller of the second access probe;
the first transceiver (14a) notifying the particular neighbouring transceiver (12b) of the second access probe; or
the first transceiver (14a) notifying any one neighbouring transceiver (11c) of the second access probe, the one neighbouring transceiver (11c) being selected from all neighbouring transceivers (14b, 14c, 11c, 12b) based on receiving report from a transmitter (51) of the second access probe that there is better signal quality from the one neighbouring transceiver (11c) than from other neighbouring transceivers (14b, 14c, 12b).

13. The method of claim 11 or claim 12 further comprising:
the first transceiver (14a) taking (6-6) response actions to the second access probe if the decision node (40, 11c, 12b,) indicates to do so.

14. The method of any one of claims 8 to 13 further comprising:
the first transceiver (14a) transmitting (6-1) an identification of the primary access code such that receivers (50) receiving the identification can generate access probes that use the primary access code.

15. The method of any one of claims 8 to 14 wherein the secondary access code is any one of a plurality of access codes collectively identified in transmissions from neighbouring transceivers.

16. The method of any one of claims 8 to 15 wherein the first access probe is spread by the primary access code and the second access probe is spread by the secondary access code.

17. The method of claim 16 wherein both the primary access code and the secondary access code are pseudo noise codes.

18. A computer readable medium having computer executable instructions stored thereon for execution on a processor (32) of a computing device so as to implement the method of any one of claims 8 to 17.

19. A plurality of transceivers (11c, 12b, 14a) operable to implement the method of any one of claims 1 to 17.

20. The plurality of transceivers (11c, 12b, 14a) of claim 19 forming part of and in combination with a cellular network (60).

21. A method comprising:
receiving (5-1) information indicating that an access probe was received and decoded by a first transceiver (14a) of a plurality of transceivers (11c, 12b, 14a) the access probe being received and decoded by at least one other of the plurality of the transceivers and using any one of at least one access code;
determining (5-3) which at least one particular transceiver (14a) of the plurality of transceivers (11c, 12b, 14a) is to take response actions to the access probe; and
sending (5-4) an indication for the at least one particular transceiver (14a) to take response actions to the access probe.

22. The method of claim 21 further comprising:
upon receiving (5-1) the information that the access probe was received and decoded by the first transceiver (14a), waiting (5-2) for a period of time for any additional information indicating that the access probe was received and decoded by at least a second transceiver (12b);
wherein if additional information is received, then determining (5-3) which at least one transceiver (14a) of the plurality of transceivers (11c, 12b, 14a) is to take response actions to the access probe is based on the information and/or the additional information.

23. The method of claim 22 further comprising:
using a timer for timing the period of time.

24. The method of any one of claims 21 to 23 wherein the at least one particular transceiver (14a) is selected based on a signal quality of at least one of a reverse link and a forward link.

25. The method of claim 24 wherein:
the signal quality of the reverse link is determined based on a signal quality of the access probe; and
the signal quality of the forward link is determined based on reported signal quality parameters received as part of the access probe.

26. The method of any one of claims 21 to 25 wherein the at least one particular transceiver (14a) comprises a transceiver (14a) that has a service association with a transmitter (50) of the access probe.

27. The method of claim 26 wherein the service association comprises at least one of monitoring a paging channel, monitoring a control channel, monitoring a broadcasting channel, an idle hand-off, an idle hand-over, a registration, a pairing, or a camping.

28. A computer readable medium having computer executable instructions stored thereon for execution on a processor (32) of a computing device so as to implement the method of any one of claims 21 to 27.

29. A decision node (40, 14a) operable to implement the method of any one of claims 21 to 27.

30. The decision node (40, 14a) of claim 29 wherein the decision node is any one of:
a Base Station Controller (40);
a Radio Network Controller; or
a transceiver (14a).

## Patentansprüche

1. Ein Verfahren in einem zellulären Netz (60), das eine Vielzahl von Sendeempfängern (11 c, 12b, 14a) umfasst, das Verfahren umfassend:
das Empfangen und Decodieren einer Zugangssondierung, die mindestens einen Zugangscode verwendet, durch einen ersten Sendeempfänger (14a) aus der Vielzahl von Sendeempfängern (11 c, 12b, 14a); und
das Empfangen und Decodieren der Zugangssondierung durch mindestens einen anderen Sendeempfänger (12b) aus der Vielzahl von Sendeempfängern (11 c, 12b, 14a).

2. Verfahren gemäß Anspruch 1, wobei der mindestens eine Zugangscode eine Vielzahl von Zugangscodes umfasst, die für die Vielzahl von Sendeempfängern (11 c, 12b, 14a) allgemein gebräuchlich sind.

3. Verfahren gemäß Anspruch 1 oder Anspruch 2, des Weiteren umfassend:
das Ermitteln (3-3) von mindestens einem konkreten Sendeempfänger (14a) aus der Vielzahl von Sendeempfängern (11 c, 12b, 14a), der Reaktionsmaßnahmen auf die Zugangssondierung ergreifen soll, durch einen Entscheidungsknoten (40, 14a); und
das Ergreifen von Reaktionsmaßnahmen auf die Zugangssondierung durch jeden des mindestens einen konkreten Sendeempfängers (14a).

4. Verfahren gemäß Anspruch 3, wobei der Entscheidungsknoten (40, 14a) eines der Folgenden ist:
ein Base Station Controller (40);
ein Radio Network Controller;
ein konkreter Sendeempfänger (14a), der über eine Dienstverknüpfung mit einem Sender (50) der Zugangssondierung verfügt; oder
einer der benachbarten Sendeempfänger (11 c) des konkreten Sendeempfängers (14a), wobei die Auswahl des einen benachbarten Sendeempfängers (11 c) aus allen benachbarten Sendeempfängern (14b, 14c, 11 c, 12b) auf der Basis des Empfangs eines Berichts von einem Sender (50) der Zugangssondierung erfolgt, dass es von dem einen benachbarten Sendeempfänger (11c) eine bessere Signalqualität gibt als von anderen benachbarten Sendeempfängern (14b, 14c, 12b).

5. Verfahren gemäß einem der Ansprüche 1 bis 4, des Weiteren umfassend:
das Senden einer Kennung des mindestens einen Zugangscodes durch jeden Sendeempfänger (11 c, 12b, 14a), so dass Empfänger (50, 51), welche die Kennung empfangen, Zugangssondierungen erzeugen können, die einen beliebigen von dem mindestens einem Zugangscode verwenden.

6. Verfahren gemäß einem der Ansprüche 1 bis 5, wobei jede Zugangssondierung durch einen von dem mindestens einen Zugangscode verbreitet wird.

7. Verfahren gemäß einem der Ansprüche 1 bis 6, wobei jeder von dem mindestens einen Zugangscode ein Pseudo-Noise-Code ist.

8. Verfahren gemäß Anspruch 1, wobei das Empfangen und Decodieren der Zugangssondierung durch den ersten Sendeempfänger (14a) umfasst:
das Empfangen und Decodieren (6-2) einer ersten Zugangssondierung durch den ersten Sendeempfänger (14a), die einen mit dem ersten Sendeempfänger (14a) verknüpften Primärzugangscode verwendet, wobei der mit dem ersten Sendeempfänger verknüpfte Primärzugangscode auch ein Sekundärzugangscode für den mindestens einen anderen Sendeempfänger (12b) ist.

9. Verfahren gemäß Anspruch 8, des Weiteren umfassend:
das Empfangen und Decodieren (6-4) einer zweiten Zugangssondierung durch den ersten Sendeempfänger (14a), die einen Sekundärzugangscode verwendet, wobei der Sekundärzugangscode ein Primärzugangscode eines konkreten benachbarten Sendeempfängers (12b) ist.

10. Verfahren gemäß Anspruch 8 oder Anspruch 9, des Weiteren umfassend:
das Ergreifen (6-6) von Reaktionsmaßnahmen auf die erste Zugangssondierung durch den ersten Sendeempfänger (14a).

11. Verfahren gemäß Anspruch 8 oder Anspruch 9, des Weiteren umfassend:
das Benachrichtigen (6-5) eines Entscheidungsknotens (40, 11 c, 12b) über die zweite Zugangssondierung durch den ersten Sendeempfänger (14a).

12. Verfahren gemäß Anspruch 11, wobei das Benachrichtigen (6-5) des Entscheidungsknotens (40, 11 c, 12b) über die zweite Zugangssondierung durch den ersten Sendeempfänger (14a) mindestens eines der Folgenden umfasst:
das Benachrichtigen eines Base Station Controllers (40) über die zweite Zugangssondierung durch den ersten Sendeempfänger (14a);
das Benachrichtigen eines Radio Network Controllers über die zweite Zugangssondierung durch den ersten Sendeempfänger (14a);
das Benachrichtigen des konkreten benachbarten Sendeempfängers (12b) über die zweite Zugangssondierung durch den ersten Sendeempfänger (14a); oder
das Benachrichtigen eines beliebigen benachbarten Sendeempfängers (11 c) über die zweite Zugangssondierung durch den ersten Sendeempfänger (14a), wobei die Auswahl des einen benachbarten Sendeempfängers (11 c) aus allen benachbarten Sendeempfängern (14b, 14c, 11 c, 12b) auf der Basis des Empfangs eines Berichts von einem Sender (51) der zweiten Zugangssondierung erfolgt, dass es von dem einen benachbarten Sendeempfänger (11 c) eine bessere Signalqualität gibt als von anderen benachbarten Sendeempfängern (14b, 14c, 12b).

13. Verfahren gemäß Anspruch 11 oder Anspruch 12, des Weiteren umfassend:
das Ergreifen (6-6) von Reaktionsmaßnahmen auf die zweite Zugangssondierung durch den ersten Sendeempfänger (14a), wenn der Entscheidungsknoten (40, 11 c, 12b) dieses anzeigt.

14. Verfahren gemäß einem der Ansprüche 8 bis 13, des Weiteren umfassend:
das Senden (6-1) einer Kennung des Primärzugangscodes durch den ersten Sendeempfänger (14a), so dass Empfänger (50), welche die Kennung empfangen, Zugangssondierungen erzeugen können, die den Primärzugangscode verwenden.

15. Verfahren gemäß einem der Ansprüche 8 bis 14, wobei der Sekundärzugangscode einer aus einer Vielzahl von Zugangscodes ist, die kollektiv in Übertragungen von benachbarten Sendeempfängern identifiziert werden.

16. Verfahren gemäß einem der Ansprüche 8 bis 15, wobei die erste Zugangssondierung durch den Primärzugangscode verbreitet wird und die zweite Zugangssondierung durch den Sekundärzugangscode verbreitet wird.

17. Verfahren gemäß Anspruch 16, wobei sowohl der Primärzugangscode als auch der Sekundärzugangscode Pseudo-Noise-Codes sind.

18. Ein computerlesbares Medium, auf dem durch Computer ausführbare Anweisungen gespeichert sind, die durch einen Prozessor (32) eines Computergeräts ausgeführt werden können, um das Verfahren gemäß einem der Ansprüche 8 bis 17 zu implementieren.

19. Eine Vielzahl von Sendeempfängern (11 c, 12b, 14a), die betrieben werden können, um das Verfahren gemäß einem der Ansprüche 1 bis 17 zu implementieren.

20. Vielzahl von Sendeempfängern (11 c, 12b, 14a) gemäß Anspruch 19, die Bestandteil eines zellulären Netzes (60) sind und in Kombination mit diesem arbeiten.

21. Ein Verfahren, umfassend:
das Empfangen (5-1) von Informationen, die anzeigen, dass durch einen ersten Sendeempfänger (14a) aus einer Vielzahl von Sendeempfängern (11c, 12b, 14a) eine Zugangssondierung empfangen und decodiert wurde, wobei der Zugangscode durch mindestens einen anderen aus der Vielzahl von Sendeempfängern und unter Verwendung von einem des mindestens einen Zugangscodes empfangen und decodiert wird;
das Ermitteln (5-3), welcher des mindestens einen konkreten Sendeempfängers (14a) aus der Vielzahl von Sendeempfängern (11 c, 12b, 14a) Reaktionsmaßnahmen auf die Zugangssondierung ergreifen soll; und
das Senden (5-4) einer Anzeige für den mindestens einen konkreten Sendeempfänger (14a) zum Ergreifen von Reaktionsmaßnahmen auf die Zugangssondierung.

22. Verfahren gemäß Anspruch 21, des Weiteren umfassend:
beim Empfangen (5-1) der Informationen, dass durch den ersten Sendeempfänger (14a) die Zugangssondierung empfangen und decodiert wurde, das Warten (5-2) für eine Zeitdauer auf zusätzliche Informationen, die anzeigen, dass die Zugangssondierung durch mindestens einen zweiten Sendeempfänger (12b) empfangen und decodiert wurde;
wobei, falls zusätzliche Informationen empfangen werden, dann das Ermitteln (5-3) erfolgt, welcher mindestens eine Sendeempfänger (14a) aus der Vielzahl von Sendeempfängern (11 c, 12b, 14a) Reaktionsmaßnahmen auf die Zugangssondierung ergreifen soll, auf der Basis der Informationen und/oder der zusätzlichen Informationen.

23. Verfahren gemäß Anspruch 22, des Weiteren umfassend:
das Verwenden eines Timers zur zeitlichen Abstimmung der Zeitdauer.

24. Verfahren gemäß einem der Ansprüche 21 bis 23, wobei die Auswahl des mindestens einen konkreten Sendeempfängers (14a) auf der Basis einer Signalqualität von mindestens einem einer Aufwärtsstrecke und einer Abwärtsstrecke erfolgt.

25. Verfahren gemäß Anspruch 24, wobei:
das Ermitteln der Signalqualität der Aufwärtsstrecke auf der Basis einer Signalqualität der Zugangssondierung erfolgt; und
das Ermitteln der Signalqualität der Abwärtsstrecke auf der Basis von berichteten Signalqualitätsparametern erfolgt, die als Bestandteil der Zugangssondierung empfangen wurden.

26. Verfahren gemäß einem der Ansprüche 21 bis 25, wobei der mindestens eine konkrete Sendeempfänger (14a) einen Sendeempfänger (14a) umfasst, der über eine Dienstverknüpfung mit einem Sender (50) der Zugangssondierung verfügt.

27. Verfahren gemäß Anspruch 26, wobei die Dienstverknüpfung mindestens eines der Folgenden umfasst: die Überwachung eines Paging-Kanals, die Überwachung eines Steuerungskanals, die Überwachung eines Broadcasting-Kanals, eine Frei-Umschaltung, eine Frei-Weiterreichung, eine Registrierung, eine Paarbildung oder eine Warteschaltung.

28. Ein computerlesbares Medium, auf dem durch Computer ausführbare Anweisungen gespeichert sind, die durch einen Prozessor (32) eines Computergeräts ausgeführt werden können, um das Verfahren gemäß einem der Ansprüche 21 bis 27 zu implementieren.

29. Ein Entscheidungsknoten (40, 14a), der zur Implementierung des Verfahrens gemäß einem der Ansprüche 21 bis 27 betrieben werden kann.

30. Entscheidungsknoten (40, 14a) gemäß Anspruch 29, wobei der Entscheidungsknoten eines der Folgenden ist:
ein Base Station Controller (40);
ein Radio Network Controller; oder
ein Sendeempfänger (14a).

## Revendications

1. Procédé dans un réseau cellulaire (60) comprenant une pluralité d'émetteurs/récepteurs (11c, 12b, 14a), ledit procédé consistant à :
faire recevoir et décoder par un premier émetteur/récepteur (14a) de la pluralité d'émetteurs/récepteurs (11c, 12b, 14a) une sonde d'accès qui utilise l'un quelconque d'un ou plusieurs code(s) d'accès
et
faire recevoir et décoder la sonde d'accès par au moins un autre émetteur/récepteur (12b) parmi la pluralité d'émetteurs/récepteurs (11c, 12b, 14a).

2. Procédé de la revendication 1 dans lequel le(s) code(s) d'accès comprend/comprennent une pluralité de codes d'accès communs à la pluralité d'émetteurs/récepteurs (11c, 12b, 14a).

3. Procédé de la revendication 1 ou 2 comprenant en outre :
un noeud de décision (40, 14a) déterminant (3-3) au moins un émetteur/récepteur particulier (14a) parmi la pluralité d'émetteurs/récepteurs (11c, 12b, 14a) qui doit prendre des mesures de réponse à la sonde d'accès ; et
chacun du/des émetteurs/récepteurs (14a) particulier(s) prenant des mesures de réponse à la sonde d'accès.

4. Procédé de la revendication 3 dans lequel le noeud de décision (40, 14a) peut être l'un quelconque des éléments suivants :
un contrôleur de station de base (40) ;
un contrôleur de réseau radio ;
un émetteur/récepteur particulier (14a) ayant une association de service avec un émetteur (50) de la sonde d'accès ; ou
tout émetteur/récepteur voisin (11c) de l'émetteur/récepteur particulier (14a), ledit émetteur/récepteur voisin (11c) étant sélectionné parmi tous les émetteurs/récepteurs voisins (14b, 14c 11c, 12b) sur la base de la réception d'un rapport provenant d'un émetteur/récepteur (50) de la sonde d'accès indiquant que l'émetteur/récepteur voisin (11c) fournit une meilleure qualité de signal que les autres émetteurs/récepteurs voisins (14b, 14c, 12b).

5. Procédé de l'une quelconque des revendications 1 à 4 comprenant également l'étape consistant à :
faire transmettre par chaque émetteur/récepteur (11c, 12b, 14a) une identification du ou des code(s) d'accès de manière que les récepteurs (50, 51) recevant l'identification puissent générer des sondes d'accès qui utilisent l'un quelconque du ou des code(s) d'accès.

6. Procédé de l'une quelconque des revendications 1 à 5 dans lequel chaque sonde d'accès est étalée par l'un quelconque du ou des code(s) d'accès.

7. Procédé de l'une quelconque des revendications 1 à 6 dans lequel chacun du ou des code(s) d'accès est un code de pseudo-bruit.

8. Procédé de la revendication 1 dans lequel le premier émetteur/récepteur (14a) recevant et décodant la sonde d'accès consiste à :
faire recevoir et décoder (6-2) par le premier émetteur/récepteur (14a) une première sonde d'accès qui utilise un code d'accès primaire associé au premier émetteur/récepteur (14a), le code d'accès primaire associé au premier émetteur/récepteur étant aussi un code d'accès secondaire pour l'/les autre(s)émetteur(s)/récepteur(s) (12b).

9. Procédé de la revendication 8 comprenant en outre l'étape consistant à :
faire recevoir et décoder (6-4) par le premier émetteur/récepteur (14a) une deuxième sonde d'accès qui utilise un code d'accès secondaire, le code d'accès secondaire étant un code d'accès primaire d'un émetteur/récepteur voisin particulier (12b).

10. Procédé de la revendication 8 ou 9 comprenant en outre :
faire prendre par le premier émetteur/récepteur (14a) des mesures de réponse (6-6) à la première sonde d'accès.

11. Procédé de la revendication 8 ou 9 comprenant en outre :
la notification (6-5) à un noeud de décision (40, 11c, 12b) par le premier émetteur/récepteur (14a) de la deuxième sonde d'accès.

12. Procédé de la revendication 11 dans lequel le premier émetteur/récepteur (14a) qui notifie (6-5) la deuxième sonde d'accès au noeud de décision (40, 11c, 12b) se compose au moins :
du premier émetteur/récepteur (14a) qui notifie la deuxième sonde d'accès à un contrôleur de station de base (40) ;
du premier émetteur/récepteur (14a) qui notifie la deuxième sonde d'accès à un contrôleur de réseau radio ;
du premier émetteur/récepteur (14a) qui notifie la deuxième sonde d'accès à l'émetteur/récepteur voisin particulier (12b) ; ou
du premier émetteur/récepteur (14a) qui notifie la deuxième sonde d'accès à un quelconque émetteur/récepteur voisin (11c) , ledit émetteur/récepteur voisin (11c) étant sélectionné parmi tous les émetteurs/récepteurs voisins (14b, 14c 11c, 12b) sur la base de la réception d'un rapport venant d'un émetteur/récepteur (51) de la deuxième sonde d'accès indiquant que l'émetteur/récepteur voisin (11c) fournit une meilleure qualité de signal que les autres émetteurs/récepteurs voisins(14b, 14c, 12b).

13. Procédé de la revendication 11 ou 12 consistant en outre à :
faire prendre par le premier émetteur/récepteur (14a) des mesures de réponse (6-6) à la deuxième sonde d'accès si un noeud de décision (40, 11c, 12b) lui indique de le faire.

14. Procédé de l'une quelconque des revendications 8 à 13 consistant en outre à :
faire transmettre (6-1) par le premier émetteur/récepteur (14a) une identification du premier code d'accès de manière que les récepteurs (50) recevant l'identification puissent générer des sondes d'accès qui utilisent le code d'accès primaire.

15. Procédé de l'une quelconque des revendications 8 à 14 dans lequel le code d'accès secondaire est un code parmi une pluralité de codes d'accès collectivement identifiés dans des transmissions venant d'émetteurs/récepteurs voisins.

16. Procédé de l'une quelconque des revendications 8 à 15 dans lequel la première sonde d'accès est étalée par le code d'accès primaire et la deuxième sonde d'accès est étalée par le code d'accès secondaire.

17. Procédé de la revendication 16 dans lequel tant le code d'accès primaire que le code d'accès secondaire sont des codes de pseudo-bruit.

18. Support lisible par ordinateur stockant des instructions exécutables par ordinateur afin de les exécuter sur un processeur (32) d'un dispositif informatique de manière à mettre en oeuvre le procédé de l'une quelconque des revendications 8 à 17.

19. Pluralité d'émetteurs/récepteurs (11c, 12b, 14a) pouvant être exploités pour implémenter le procédé de l'une quelconque des revendications 1 à 17.

20. La pluralité des émetteurs/récepteurs (11c, 12b, 14a) de la revendication 19 faisant partie d'un réseau cellulaire (60) et s'y combinant.

21. Procédé consistant à :
faire recevoir (5-1) des informations indiquant qu'une sonde d'accès a été reçue et décodée par un premier émetteur/récepteur (14a) parmi une pluralité d'émetteurs/récepteurs (11c, 12b, 14a), la sonde d'accès étant reçue et décodée par au moins un autre émetteur/récepteur parmi la pluralité d'émetteurs/récepteurs et utilisant l'un quelconque du ou des code(s) d'accès ;
déterminer (5-3) quel au moins un émetteur/récepteur particulier (14a) parmi la pluralité d'émetteurs/récepteurs (11c, 12b, 14a) doit prendre des mesures de réponse à la sonde d' accès ; et
envoyer (5-4) une indication pour que l'émetteur/récepteur ou les émetteurs/récepteurs (14a) particulier(s) prenne(nt) des mesures de réponse à la sonde d'accès.

22. Procédé de la revendication 21 consistant en outre à :
lors de la réception (5-1) des informations indiquant que la sonde d'accès a été reçue et décodée par le premier émetteur/récepteur (14a), attendre (5-2) pendant une période donnée l'arrivée de toutes informations complémentaires indiquant que la sonde d'accès a été reçue et décodée par au moins un deuxième émetteur/récepteur (12b) ;
dans lequel, si des informations complémentaires sont reçues, déterminer ensuite (5-3) quel au moins un émetteur/récepteur (14a) parmi la pluralité d'émetteurs/récepteurs (11c, 12b, 14a), doit prendre des mesures de réponse à la sonde d'accès, sur la base des informations et/ou des informations complémentaires.

23. Procédé de la revendication 22 consistant en outre à :
utiliser une temporisation pour calculer la période.

24. Procédé de l'une quelconque des revendications 21 à 23 dans lequel l'émetteur/récepteur ou les émetteurs/récepteurs particulier(s) (14a) est/sont sélectionné(s) sur la base de la qualité de signal d'au moins une liaison parmi une liaison aller et une liaison retour.

25. Procédé de la revendication 24 dans lequel
la qualité de signal de la liaison retour est déterminée sur la base d'une qualité de signal de la sonde d' accès ; et
la qualité de signal de la liaison aller est déterminée sur la base des paramètres de qualité de signal du rapport reçus dans le cadre de la sonde d'accès.

26. Procédé de l'une quelconque des revendications 21 à 25 dans lequel l'émetteur/récepteur ou les émetteurs/récepteurs (14a) particulier(s) comprend/comprennent un émetteur/récepteur (14a) qui possède une association de service avec un émetteur (50) de la sonde d'accès.

27. Procédé de la revendication 26 dans lequel le service d'association comprend au moins un des éléments suivants : surveillance d'un canal d'appel unilatéral, surveillance d'un canal de commande, surveillance d'un canal de diffusion, un transfert intercellulaire (handoff ou handover) au repos, une inscription, un appariement ou une mise en attente sur une cellule.

28. Support lisible par ordinateur stockant des instructions exécutables par ordinateur afin de les exécuter sur un processeur (32) d'un dispositif informatique de manière à mettre en oeuvre le procédé de l'une quelconque des revendications 21 à 27.

29. Noeud de décision (40, 14a) pouvant être exploité pour mettre en oeuvre le procédé de l'une quelconque des revendications 21 à 27.

30. Noeud de décision (40, 14a) de la revendication 29 dans lequel le noeud de décision peut être l'un quelconque des éléments suivants :
un contrôleur de station de base (40) ;
un contrôleur de réseau radio ; ou
un émetteur/récepteur (14a).
